# FASCICULE DE BREVET EUROPEEN

(11) **EP 2 480 400 B1**
(45) Date de publication et mention de la délivrance du brevet: **12.03.2014**
(21) Numéro de dépôt: 10770588.1
(22) Date de dépôt: 20.09.2010
(51) Int. Cl.: B29C 70/38

(54) **DISPOSITIF ET PROCÉDÉ POUR LE DRAPAGE AUTOMATISÉ DE COMPOSITES**
AUTOMATISIERTE DRAPIERVORRICHTUNG UND DRAPIERVERFAHREN FÜR VERBUNDSTOFFE
APPARATUS AND METHOD FOR AUTOMATED COMPOSITE LAY-UP

(30) Priorité: 21.09.2009 FR 0956481
(43) Date de publication de la demande: 01.08.2012
(73) Titulaire: Airbus Operations (S.A.S.), 31060 Toulouse (FR)
(72) Inventeur: BLOT, Philippe, F-44000 Nantes (FR); GUITTARD, Dominique, F-31400 Toulouse (FR); DUBILLOT, Jeannick, F-44330 Le Pallet (FR); CHÉNÉ, Stéphane, F-49120 Chemillé (FR); GAUTHIER, Cédric, F-44190 Gorges (FR); FOURNIER, Jean-Louis, F-44470 Carquefou (FR)
(74) Mandataire: Cornuejols, Christophe
(86) Numéro de dépôt international: PCT/FR2010/051947
(87) Numéro de publication internationale: WO 2011/033240

(56) Documents cités:
- EP-A1- 0 846 551
- DE-A1-102006 060 361
- US-A- 4 541 886
- US-A- 4 569 716
- US-A- 5 228 944
- US-A1- 2007 187 026
- US-A1- 2008 085 335
- US-B1- 6 451 152

## Description

L'invention concerne un dispositif automatisé pour la mise en oeuvre d'une étape de drapage afin de constituer une préforme fibreuse stratifiée qui est ensuite imprégnée de résine afin de réaliser une pièce en matériau composite. Une telle préforme est dite sèche car elle est essentiellement constituée de fibres et ne contient qu'une très faible quantité de résine, généralement moins de 5 % en masse, destinée notamment à conférer à ladite préforme la cohésion nécessaire pour permettre sa manipulation lors des étapes ultérieures de fabrication de la pièce.

L'invention concerne plus particulièrement la réalisation de préformes destinées à la fabrication de pièces s'étendant essentiellement selon deux dimensions telles que des panneaux, notamment de forte épaisseur. De telles pièces sont utilisées, par exemple, en aéronautique, en tant que panneaux de voilure ou pour la réalisation du caisson central de voilure d'un aéronef.

La stratification de ces panneaux plans ou courbes à grand rayon de courbure est réalisée sur des outillages qui reproduisent la forme dudit panneau. Des bandes de matériau fibreux sont déposées sur cet outillage de sorte à constituer des couches. Lesdites bandes sont poudrées d'une faible quantité de résine. L'adhésion des couches entre elles est obtenue en activant thermiquement cette résine poudrée et en compactant l'empilage. Portée à une température dite d'activation, la résine se fluidifie et colle les couches les unes sur les autres lors de sa solidification.

L'intérêt de ce procédé de fabrication de pièces, séparant drapage et imprégnation, est la possibilité d'intégrer des sous ensembles en une même pièce.

Un autre avantage est la possibilité de réaliser une stratification complexe faisant intervenir plusieurs matériaux. Par exemple, il est possible de déposer, pour la constitution d'une même pièce, des couches non tissées et des tissus, voir de varier la nature de fibres déposées en fonction de leur position dans l'empilement.

Les bandes de matière déposées n'étant pas pégueuses, une attention particulière doit être portée sur l'alignement des lés successivement déposés sur la préforme ainsi que sur l'absence d'ondulation des fibres dans les lés déposés. Les désalignements sont générés par des glissements du lé déposé perpendiculairement à la direction de dépose. Ils peuvent se traduire par des écarts de mèches de renfort ou des superpositions qui vont générer des défauts dans la pièce après injection et polymérisation. Les ondulations de fibres sont liées à une mauvaise maîtrise de la vitesse de dépose ou à un glissement du lé parallèlement à la direction de dépose. De telles ondulations de fibres font chuter les caractéristiques mécaniques de la pièce finale.

C'est pourquoi, selon l'art antérieur, ces opérations de drapage sont réalisées en grande partie manuellement et ne permettent pas d'atteindre des taux de dépose très élevés.

Le document DE 102006060361 - A révèle un dispositif pour le drapage d'une préforme fibreuse stratifiée, comprenant un manipulateur apte à déplacer et orienter dans l'espace une tête de drapage, ladite tête de drapage comportant un tambour avec au moins un orifice d'aspiration débouchant à sa surface et apte à la préhension individuelle d'un lé sur un support extérieur à l'outillage et à la tête de drapage.

Aussi les documents US 2007/187026 - A et US 4541886 - A révèlent des dispositifs de drapage similaires.

L'invention vise à automatiser un tel procédé afin d'accroître le taux de dépose tout en conservant la versatilité du procédé manuel.

À cette fin, l'invention propose un dispositif comme défini dans la revendication 1, pour le drapage d'une préforme fibreuse stratifiée dite sèche sur un outillage en forme, comprenant un manipulateur apte à déplacer et orienter dans l'espace une tête de drapage, ladite tête de drapage comportant :
- un tambour comportant au moins un orifice d'aspiration débouchant à sa surface et apte à la préhension individuelle d'un lé sur un support extérieur à l'outillage et à la tête de drapage ;
- des moyens de chauffage du lé ;
et comprenant en outre des moyens aptes à compacter le lé sur la préforme et à le mettre en tension avant son compactage comportant :
- des moyens de motorisation aptes à entraîner le tambour à une vitesse de rotation contrôlée autour de son axe ;
- un rouleau maroufleur séparé du tambour et des moyens pour pré-adapter sa forme, apte à compacter le lé déposé sur la préforme.

Le manipulateur peut être de type portique ou sous la forme d'un robot anthropomorphique mais doit permettre un déplacement de la tête de drapage adapté à la direction de dépose des lés et l'orientation de cette tête de drapage de sorte que l'axe du tambour soit sensiblement parallèle à la tangente à la surface drapée pendant la dépose du lé.

Ces moyens permettent de déposer sur la préforme des lés individuels et ainsi de faire varier d'un lé à l'autre, si nécessaire, la nature du matériau déposé. Ces matériaux n'étant pas imprégnés, donc non pégueux, le dispositif aspiration à la surface du tambour permet de maintenir puis de libérer les lés par l'installation et la cassure d'une dépression entre le lé et la surface du tambour. Ces moyens d'aspiration coopèrent avec la motorisation du tambour et le rouleau maroufleur séparé pour obtenir une tension contrôlée du lé lors de sa dépose et ainsi éviter les ondulations de fibres dans le lé avant son compactage. Le dispositif de pressage et de chauffage du lé permet d'activer thermiquement la résine poudrée et ainsi d'obtenir l'adhésion du lé sur la préforme. Les moyens de préadaptation de la forme du rouleau maroufleur permettent d'optimiser le profil de pression du lé sur la préforme dans le but d'améliorer encore les effets précédents.

L'invention peut être mise oeuvre selon des modes réalisation avantageux exposés ci-après et définis dans les revendications dépendantes, lesquels peuvent être considérés individuellement ou selon toute combinaison techniquement opérante.

Avantageusement, les moyens pour adapter la forme du rouleau maroufleur comprennent :
-- deux tourillons aptes à le guider en rotation à chacune de ses extrémités ;
-- un ressort hélicoïdal lié aux tourillons et s'étendant entre lesdites extrémités, ledit ressort étant sensiblement parallèle à l'axe de rotation du rouleau ;
-- un dispositif apte à déplacer les tourillons d'extrémité du rouleau de sorte à conférer une courbure au ressort hélicoïdal.

Ce mécanisme simple permet de modifier la forme du rouleau presseur en tordant le ressort hélicoïdal et ainsi de modifier le profil de pression appliqué sur le lé lors du compactage.

Les moyens de pressage coopèrent avec les moyens de chauffage du lé pour lier celui-ci à la préforme. À cette fin la tête de drapage comprend avantageusement une buse de soufflage d'air chaud dont le jet est dirigé entre le tambour et la préforme et un déflecteur apte à isoler le tambour de ce jet d'air chaud. Ainsi les lés sont chauffés localement juste avant leur pressage sur la préforme. Le déflecteur évite que ce chauffage ne colle la partie de lé non encore déposée sur la surface du tambour

Avantageusement le dispositif objet de l'invention comprend des moyens de mesure de l'orientation de l'axe du tambour par rapport à la préforme, lesdits moyens étant solidaires de l'axe du tambour. Ces moyens de mesure permettent de contrôler l'orientation effective du tambour par rapport à la préforme ou à l'outillage et au besoin de corriger cette orientation par le pilotage des axes du manipulateur dans le cas où celle-ci diffère de l'orientation programmée. Cette configuration permet d'avoir un contact sur la préforme ou l'outillage le plus uniforme possible, sur toute la largeur du matériau à déposer. Un défaut d'uniformité de ce contact entraîne une liaison insuffisante entre le matériau en cours de dépose et la préforme, source de défaut du type amas de résine entre les plis, voire même d'ondulation des fibres dans la pièce finale.

Le dispositif objet de l'invention comprend avantageusement des moyens solidaires de l'axe du tambour et aptes à détecter la position du bord d'un lé adjacent et déposé antérieurement au lé en cours de dépose. La connaissance de la position du lé déjà déposé dans le repère de la machine permet de corriger la trajectoire suivie par la tête de drapage en cours de la dépose de sorte à maintenir la distance entre les bords des deux lés dans une plage autorisée par l'application finale de la pièce. Avantageusement cette correction de trajectoire est réalisée au niveau de la tête de drapage en agissant directement sur la position relative du tambour. La tête de drapage comprend à cet effet des moyens motorisés de déplacement relatif du tambour parallèlement à son axe. Ce système de correction de la trajectoire de dépose autonome à la tête, évite d'avoir un porteur (portique ou robot) très rigide et par conséquent permet d'envisager des installations de drapage de grande dimension avec des sections acceptables.

Selon un mode de réalisation particulièrement avantageux, le dispositif objet de l'invention comprend une table de découpe et des moyens aptes à découper les lés en longueur et en forme. Il comprend également de préférence un magasin de matériaux sous forme de bobines dévidables sur lesquelles sont enroulées des bandes continues de matériau.

Cette configuration du dispositif permet de mettre en oeuvre un procédé de drapage automatisé comme défini dans la revendication 6, comprenant les étapes consistant à :
a°) dévider d'une bobine une longueur de matériau sur la table de découpe,
b°) séparer la longueur dévidée de la bobine par découpe pour constituer un premier lé,
c°) Prendre ledit lé sur la table de découpe par le tambour et l'enrouler sur ledit tambour,
d°) déposer ledit lé sur la préforme en le déroulant du tambour et en le pressant sur ladite préforme,
e°) dévider d'une bobine et découper une autre longueur de matériau constituant un deuxième lé sur la table de découpe pendant la dépose du premier lé,
f°) Reprendre à l'étape c°) avec le deuxième lé.

Un tel procédé permet de draper automatiquement des panneaux comprenant des empilements complexes faisant appel à plusieurs matériaux avec une productivité élevée, notamment grâce à la préparation des lés en temps masqué.

L'invention concerne également un procédé avantageux de drapage mettant en oeuvre les moyens décrits précédemment et comprenant une étape consistant à presser le lé sur la préforme à d'aide du rouleau maroufleur, le tambour étant déplacé par le manipulateur à une vitesse d'avance et le lé étant déroulé du tambour animé d'une vitesse de rotation synchronisée avec la vitesse d'avance de telle sorte à conserver le lé en tension sensiblement constante entre sa sortie du tambour et son pressage par le rouleau maroufleur. Ce procédé permet de contrôler la tension du lé au moment de sa dépose et de lui appliquer la juste tension nécessaire pour éviter l'ondulation des fibres mais sans entraîner de modification de la distance entre les fibres.

Avantageusement, le lé est plaqué par aspiration sur le tambour pendant son déroulage afin de contrôler sa vitesse de dévidage ainsi que sa tension.

Avantageusement également, la forme du rouleau maroufleur est adaptée pour obtenir un profil de pression défini du lé sur la préforme.

Selon un mode de mise en oeuvre particulier, la forme conférée au rouleau maroufleur est non complémentaire de la forme de la préforme sur laquelle le lé est déposé. Ce mode de mise en oeuvre permet par exemple de ne coller qu'une partie de la largeur du lé.

L'invention sera maintenant plus précisément décrite dans le cadre de modes de réalisation préférés, nullement limitatifs, représentés sur les figures 1 à 13 dans lesquelles :
- la figure 1 représente une vue d'ensemble de dessus et en perspective d'un mode de réalisation du dispositif de drapage de l'invention utilisant un manipulateur cartésien de type portique ;
- la figure 2 montre un détail en perspective et vue de dessus de la tête de drapage selon le mode de réalisation de la figure 1 ;
- la figure 3 est une vue de profil en perspective d'un mode de réalisation d'une tête de drapage adaptée au dispositif de l'invention ;
- la figure 4 est une vue de profil de l'ensemble de drapage associé à la tête de drapage de la figure 3 ;
- la figure 5 est une vue schématique de profil de l'opération de drapage d'un pli à l'aide du dispositif selon l'invention
- la figure 6 est une vie en perspective et en élévation d'un mode de réalisation du tambour adapté au dispositif de drapage selon l'invention ;
- la figure 7 représente en perspective une vue d'un rouleau maroufleur et de ses dispositifs de modification de forme associés adaptés à une tête de drapage selon l'invention ;
- les figures 8, 8A, 8B montrent schématiquement de face quelques configurations de déformations pilotables du rouleau maroufleur ;
- la figure 9 est une vue en perspective de derrière d'un dispositif de chauffage par soufflage d'air chaud adapté à la tête de drapage selon l'invention ;
- la figure 10 illustre, en vue d'ensemble et de face, une opération de drapage à l'aide d'un dispositif représentant un mode de réalisation du dispositif de drapage selon l'invention ;
- la figure 11, est une vue en élévation et de détail de 2 lés successivement déposés par le dispositif objet de l'invention
- la figure 12 est une vue de face d'ensemble d'une opération de drapage à l'une d'un mode de réalisation du dispositif selon l'invention pour le drapage d'une surface courbe
- la figure 13 est une vue de profil de la table de découpe et de ses magasins de matériau selon une mode de réalisation du dispositif de l'invention.

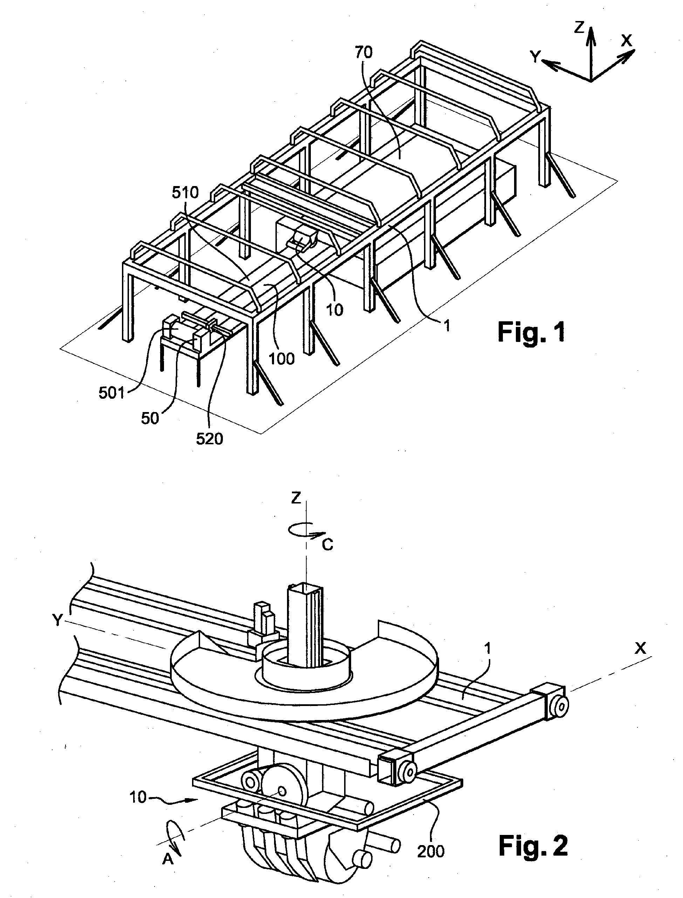

Figure 1, selon un exemple de réalisation, le dispositif objet de l'invention comprend :
- un manipulateur, ici sous la forme d'un robot portique (1)
- une tête de drapage (10) apte à être déplacée et orientée dans l'espace par le manipulateur
- une table de découpe (50) pour la préparation des lés (100)
- un outillage de dépose (70) placé dans l'espace de travail du manipulateur

Figure 2, la tête de drapage (10) est mobile par rapport au manipulateur (1) selon un axe de translation (Z) et deux axes de rotation orthogonaux (A, C), tous motorisés et pilotés par une commande numérique.

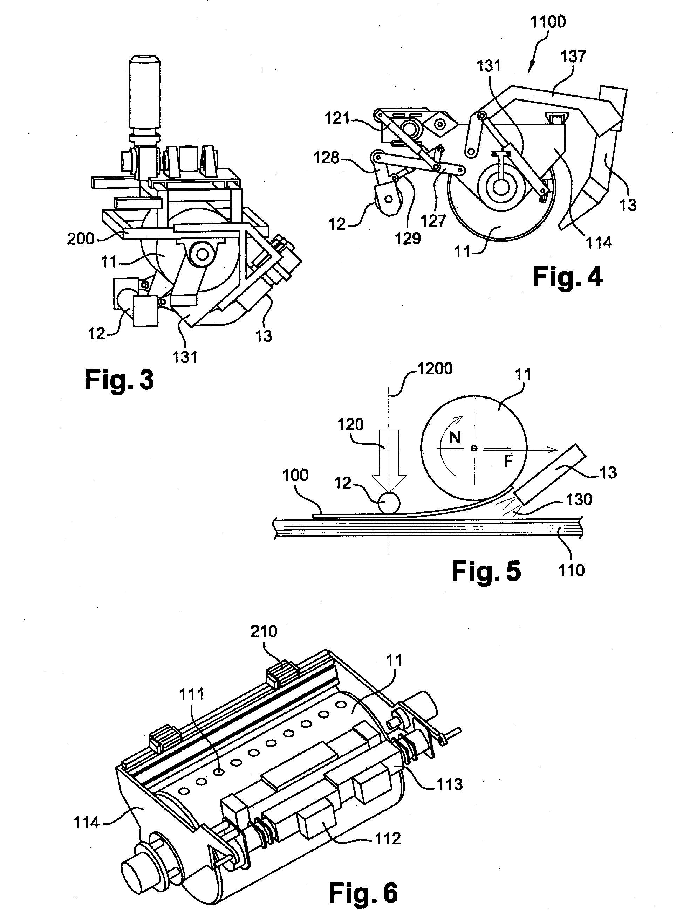

Figure 3 et 4, la tête de drapage (10) comprend un tambour (11) sur lequel est enroulé le lé à déposer, un rouleau maroufleur (12) apte à appliquer une pression (120) sur le lé en cours de dépose de sorte à compacter la préforme (110). L'ensemble (1100) comprenant le tambour (11), les buses de chauffage (13) et le rouleau maroufleur (12), dit ensemble de drapage, est connecté à la tête de drapage par l'intermédiaire d'une liaison glissière (210) se reprenant sur un cadre (200).

Figure 5, lors de la dépose le lé (100) est déroulé sur la préforme (110) depuis le tambour (11). Pour éviter l'ondulation des fibres lors de la dépose, celles-ci sont maintenues sous tension entre leur sortie du tambour et leur pressage sur la préforme. À cette fin, la tête de drapage se déplace à une vitesse d'avance (F) alors que le tambour est animé d'un mouvement de rotation à une vitesse N synchronisée avec la vitesse d'avance F de sorte à conserver le lé (100) tendu selon une tension sensiblement constante entre sa sortie du tambour et son point de pressage par le rouleau maroufleur (12). Ledit rouleau maroufleur exerce sur le lé une action de compactage (120) sensiblement parallèle au pan de dépose (1200) normal à la surface sur laquelle cette dépose a lieu. Cette pression est exercée par l'intermédiaire d'un vérin (121) hydraulique ou pneumatique, asservi en effort, agissant sur le rouleau maroufleur par un système de biellettes.

Les buses de chauffage (13) dispensent un flux d'air chaud (130) sous le lé (100), en amont de son passage sous le rouleau presseur (12). Ce flux d'air chaud chauffe également localement la surface de la préforme favorisant ainsi son compactage et l'adhésion du lé (100). Le chauffage reste cependant local et de courte durée de sorte qu'il ne produit pas une réticulation complète de la résine ainsi chauffée dans le cas d'une résine thermodurcissable. La résine de poudrage peut être de nature différente de la résine injectée ultérieurement dans la préforme. La température de chauffage est adaptée à la nature de la résine de poudrage.

Figure 6, le tambour (11) comprend à sa surface des orifices d'aspiration (111) qui permettent d'installer une dépression entre le lé (100) et la surface du tambour. Ces orifices d'aspiration sont pilotables individuellement ou par groupe de sorte à adapter la largeur de la zone d'aspiration à la largeur du lé (100). Les orifices d'aspiration peuvent notamment être pilotés séquentiellement pour la préhension d'un lé dont la découpe n'est pas perpendiculaire à la longueur, par exemple dans le cas d'une découpe en pointe, de sorte à n'aspirer que le lé. La nature fibreuse et non imprégnée de ce lé fait que la dépression se propage dans toute l'épaisseur enroulée sur le tambour. L'aspiration est conservée pendant la phase de drapage ce qui permet de maintenir le lé en contact avec le tambour et de contrôler sa vitesse de dévidage ainsi que sa tension.

Un capteur placé au-dessus du tambour permet de détecter la position de l'extrémité du lé.

En combinant l'information de ce capteur avec celle de la position angulaire du tambour, la position du plan de drapage (1200) dans l'espace machine est connue à tout moment en fonction de la position de la tête. Ces moyens permettent un contrôle précis de la dépose et aussi de positionner l'extrémité du lé sur la préforme pour le début du drapage.

Un premier moteur (112) permet de piloter la rotation du tambour autour de son axe par rapport au support de tambour (114). Avantageusement, ce moteur est lié en rotation à un codeur angulaire qui permet de connaître à tout moment la position angulaire du tambour. Un second moteur (113) permet de déplacer le tambour (11) et son support (114) parallèlement à son axe par rapport au cadre support (200).

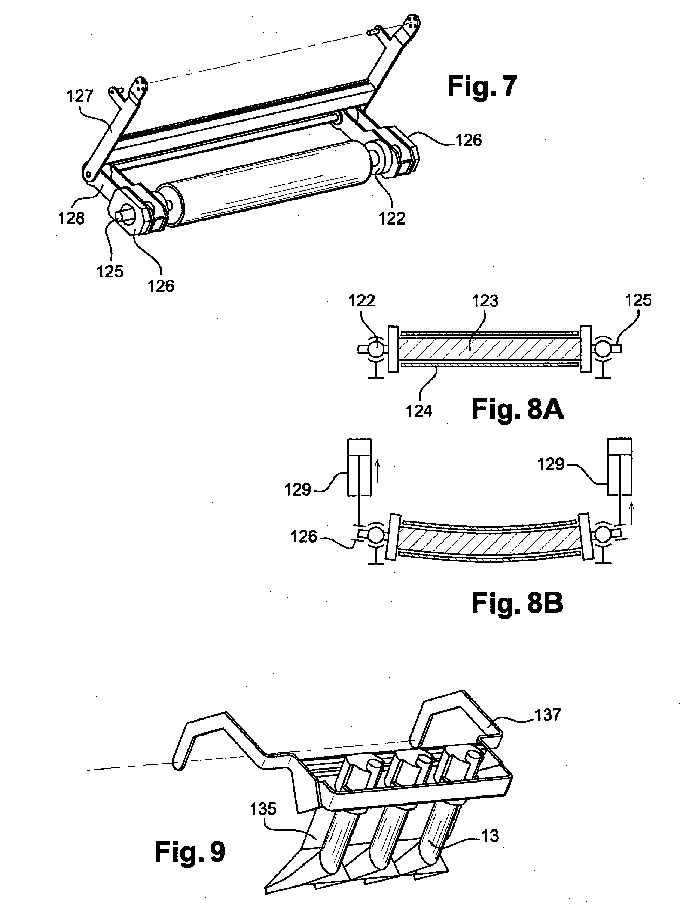

Figure 7, le rouleau maroufleur (12) est lié au support de tambour (114) par une série de biellettes (127,128). Un vérin (121) est lié au support de tambour (114) et agit sur l'une des biellettes (127). L'action du vérin (121) a pour effet de faire pivoter ladite biellette (127) amenant ainsi le rouleau maroufleur en contact avec la préforme.

Le rouleau (12) est lui-même lié au dispositif de biellettes par des tourillons (125) et des liaisons rotule (122) à chacune de ses extrémités. La partie rouleau est constituée, figure 8, par un ressort hélicoïdal (123) revêtu d'une gaine élastique (124). Les spires de ce ressort possèdent individuellement une rigidité radiale élevée qui leur permet d'appliquer la pression de compactage. En revanche, le ressort (123) dans son ensemble présente une rigidité en flexion modérée ce qui lui permet, sous l'effet de la pression de compactage (120), d'épouser le profil de la préforme (110) et ainsi de répartir de manière sensiblement uniforme la pression de compactage sur la largeur du lé (100).

Des chapes (126) permettent de déplacer l'extrémité des tourillons (125), par l'intermédiaire de deux vérins (129) agissant sur chacune des chapes. Le déplacement de l'extrémité des tourillons, figure 8B, permet de conférer une courbure au rouleau maroufleur et ainsi soit de pré-adapter sa courbure au profil de la préforme soit de modifier la répartition de la pression sur la larguer du lé en conférant au rouleau une courbure non complémentaire à celle du profil de la préforme. Cet effet est utile, notamment en bordure de préforme pour ne coller que la partie centrale du lé.

Figure 9, le dispositif de chauffage est constitué par 3 buses (13) de soufflage d'air chaud, placées dans un support (137) articulé par rapport au support de tambour (114). Un vérin (131), dont une extrémité est fixée au support de tambour (114) et l'autre au support de buses (137), permet de régler la hauteur desdites buses. Un déflecteur (135), lié au support de buses (137), isole le tambour (11) du flux d'air chaud. Avantageusement, une puissance de chauffage de 5 à 10 kW par buse de soufflage est installée, ce qui permet un chauffage très rapide du lé, avec une température de l'air soufflé égale ou légèrement supérieure à la température de chauffage visée. On évite ainsi toute brûlure du lé et de la préforme. Les 3 buses peuvent être pilotées individuellement. Ainsi, il est possible de ne chauffer que le centre ou qu'un côté du lé de sorte à en limiter la largeur d'adhésion sur la préforme en coopération avec la courbure du rouleau maroufleur.

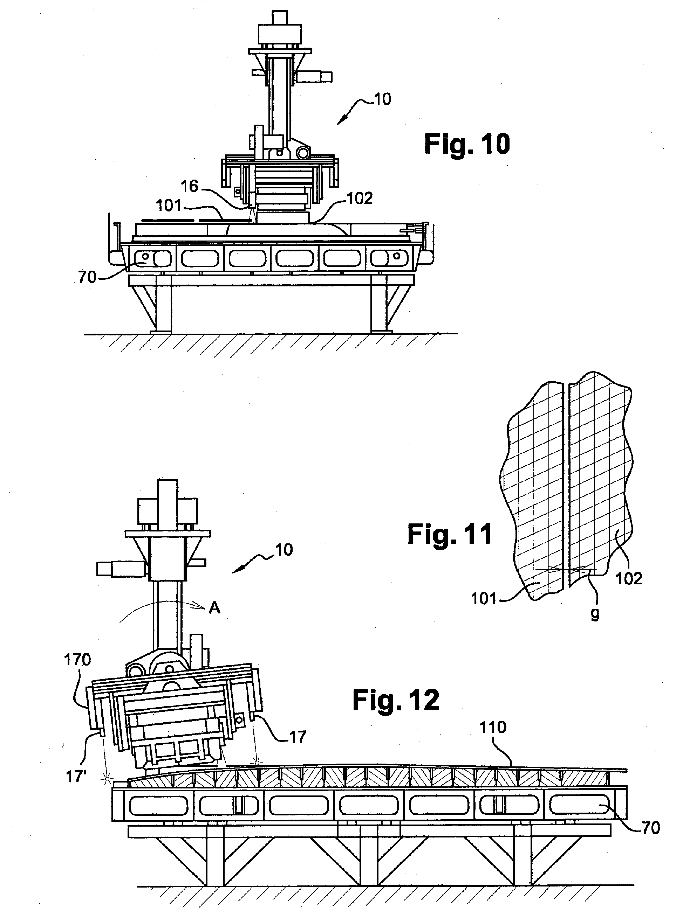

Figure 10, la tête de drapage (10) dispose d'une caméra (16) pour le contrôle de l'écart g, figure 11, entre deux lés (101,102) déposé bord à bord. Pour éviter toute ondulation des fibres, les deux lés ne doivent pas se superposer. Pour éviter la création d'une zone affaiblie dans la pièce stratifiée, la distance g doit être inférieure à 2 mm. La caméra (16) détecte la position du bord du lé adjacent déjà déposé (101). Cette information est utilisée pour asservir le moteur (113) de déplacement des moyens de drapage (1100) et maintenir la distance g entre 0,1 mm et 2 mm.

Figure 12, des capteurs de distance sans contact (17, 17') mesurent la distance entre l'axe du tambour et la préforme (110). Si la distance mesurée par le premier capteur (17) diffère de la distance mesurée par le second capteur (17') l'orientation de l'ensemble de drapage (1100) est modifiée selon l'axe A de sorte à égaliser ces deux distances. Cette caractéristique permet de placer l'axe du tambour parallèle à la tangente au profil de la préforme (110).

Les capteurs de distance (17,17') sont placés sur un cadre escamotable (170) lequel dispose également d'un d'un capteur laser de barrage qui permet de détecter la position de l'extrémité du lé (100) sur le tambour (11).

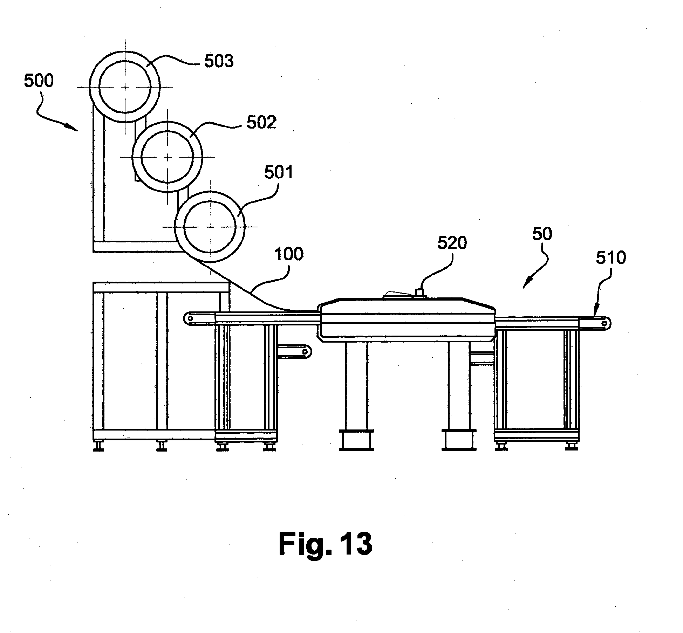

Figure 13, le dispositif objet de l'invention comprend avantageusement une table de découpe (50) associée à un magasin de matériaux (500) comprenant des bobines (501,502,503) sur lesquels sont enroulées sous forme de bandes continues des matériaux susceptibles d'être drapés sur la préforme (110). Il peut s'agir de matériaux de natures différentes, fibres de carbone ou fibres de verre par exemple, de présentations différentes, par exemple tissus et non tissés, ou des multi-axiaux empilés selon des séquences d'empilement différentes sans que cette énumération ne soit exhaustive.

Les bandes sont déroulées sur le plan de découpe (510) lequel peut avantageusement être équipé d'un dispositif à dépression apte à maintenir la bande plaquée sur ledit plan. Ladite bande est déroulée se sorte qu'un de ses bords soit en butée contre l'un des bords de la table de découpe.

À cette fin, un vérin agit sur la bobine pour la déplacer parallèlement à son axe durant le dévidage et un capteur laser détecte le bord de ta bande. Un asservissement entre ledit capteur et le vérin permet d'amener le bord de la bande en butée sur l'un des bords de la table de découpe. La bande est ainsi positionnée sur ladite table. La bande est découpée en longueur, en largeur et en profil d'extrémité par l'intermédiaire d'un dispositif automatique de découpe (520) piloté par une commande numérique apte à dialoguer avec la commande numérique du dispositif de drapage. Les opérations de découpe peuvent avoir lieu en temps masqué pendant le drapage.

Le lé (100) étant découpé en longueur et en profil et le drapage du lé précédent terminé, la tête de drapage se rapproche de la table de découpe (50) et vient récupérer sur le tambour (11) ledit lé. À cette fin la dépression est relâchée sur le plan de découpe (510) afin de libérer le lé et le tambour (11) capture ledit lé par l'intermédiaire de son dispositif d'aspiration (111).

La tête de drapage se positionne par rapport à la table de découpe pour positionner le lé sur le tambour selon une direction parallèle à l'axe de rotation dudit tambour. Par exemple de sorte que l'axe médian du lé soit positionné au milieu du tambour.
Le lé est enroulé sur ledit tambour pour être drapé sur la préforme comme décrit précédemment.

La description ci-avant illustre clairement que par ses différentes caractéristiques et leurs avantages, la présente invention atteint les objectifs qu'elle s'était fixés. En particulier, elle permet le drapage automatique de matériaux différents sur une même préforme et selon toutes les directions.

## Revendications

1. Dispositif pour le drapage d'une préforme fibreuse stratifiée (110) dite sèche sur un outillage en forme (70), comprenant un manipulateur (1) apte à déplacer et orienter dans l'espace une tête de drapage (10), ladite tête de drapage comportant :
- un tambour (11) comportant au moins un orifice d'aspiration (111) débouchant à sa surface et apte à la préhension individuelle d'un lé (100) sur un support (50) extérieur à l'outillage et à la tête de drapage ;
- des moyens de chauffage (13) du lé (100) ;
**caractérisé en ce qu'**il comprend en outre des moyens aptes à compacter le lé sur la préforme et à le mettre en tension avant son compactage comportant :
- des moyens de motorisation (112) aptes à entraîner le tambour (11) à une vitesse de rotation contrôlée autour de son axe ;
- un rouleau maroufleur (12) séparé du tambour (11) et des moyens (123, 125, 126, 129) pour pré-adapter sa forme, apte à compacter le lé déposé sur la préforme (110).

2. Dispositif selon la revendication 1, **caractérisé en ce que** les moyens pour adapter la forme du rouleau maroufleur (12) comprennent :
- deux tourillons (125) aptes à le guider en rotation à chacune de ses extrémités ;
- un ressort hélicoïdal (123) lié aux tourillons et s'étendant entre lesdites extrémités, ledit ressort étant sensiblement parallèle à l'axe de rotation du rouleau ;
- un dispositif (126,129) apte à déplacer les tourillons d'extrémité du rouleau de sorte à conférer une courbure au ressort hélicoïdal (123).

3. Dispositif selon la revendication 1, **caractérisé en ce qu'**il comprend une buse de soufflage d'air chaud (13) dont le jet (130) est dirigé entre le tambour (11) et la préforme (110) et un déflecteur (135) apte à isoler le tambour (11) de ce jet d'air chaud (130).

4. Dispositif selon la revendication 1, **caractérisé en ce qu'**il comprend des moyens de mesure (17, 17') de l'orientation de l'axe du tambour par rapport à la surface de drapage sur la préforme lesdits moyens étant solidaires de l'axe du tambour (11).

5. Dispositif selon la revendication 1, **caractérisé en ce qu'**il comprend :
- des moyens (16), solidaires de l'axe du tambour et aptes à détecter la position du bord d'un lé adjacent (101) et déposé antérieurement au lé (102) en cours de dépose ;
- des moyens motorisés (113) de déplacement relatif du tambour (11) par rapport à la tête de drapage (10) parallèlement à l'axe dudit tambour.

6. Procédé utilisant un dispositif selon la revendication 1, pour le drapage d'un lé (100) sur une préforme (110) dite sèche **caractérisé en ce qu'**il comprend une étape consistant à presser le lé sur la préforme à d'aide du rouleau maroufleur (12), le tambour (11) étant déplacé par le manipulateur (1) à une vitesse d'avance (F) et le lé (100) étant déroulé du tambour (11) animé d'une vitesse de rotation (N) synchronisée avec la vitesse d'avance (F) de telle sorte à conserver le lé (100) en tension sensiblement constante entre sa sortie du tambour (11) et son pressage par le rouleau maroufleur (12).

7. Procédé selon la revendication 6, **caractérisé en ce que** le lé (100) est plaqué par aspiration sur le tambour (11) pendant son déroulage afin de contrôler sa vitesse de dévidage ainsi que sa tension.

8. Procédé selon la revendication 6, **caractérisé en ce que** la forme du rouleau maroufleur (12) est adaptée pour obtenir un profil de pression défini du lé (100) sur la préforme (110).

9. Procédé selon la revendication 8, **caractérisé en ce que** la forme conférée au rouleau maroufleur (12) est non complémentaire de la forme de la préforme (110) sur laquelle le lé (100) est déposé.

## Patentansprüche

1. Vorrichtung zum Drapieren einer so genannten trockenen geschichteten faserigen Vorform (110) auf einem Formwerkzeug (70), umfassend einen Manipulator (1), der geeignet ist, einen Drapierkopf (10) im Raum zu bewegen und auszurichten, wobei der Drapierkopf umfasst:
- eine Trommel (11), umfassend mindestens eine Ansaugöffnung (111), die an ihrer Oberfläche mündet und zum individuellen Ergreifen einer Bahn (100) auf einem Träger (50) außerhalb des Werkzeugs und des Drapierkopfes geeignet ist;
- Mittel (13) zum Erhitzen der Bahn (100);
**dadurch gekennzeichnet, dass** sie ferner Mittel umfasst, die geeignet sind, die Bahn auf der Vorform zu verdichten und sie vor ihrer Verdichtung zu spannen, umfassend:
- Motorisierungsmittel (112), die geeignet sind, die Trommel (11) mit einer kontrollierten Drehgeschwindigkeit um ihre Achse anzutreiben;
- eine Leimwalze (12), die von der Trommel (11) getrennt ist, und Mittel (123, 125, 126, 129), um ihre Form voranzupassen, geeignet, um die auf die Vorform (110) aufgebrachte Bahn zu verdichten.

2. Vorrichtung nach Anspruch 1, **dadurch gekennzeichnet, dass** die Mittel zum Anpassen der Form der Leimwalze (12) umfassen:
- zwei Drehzapfen (125), die geeignet sind, um sie in Drehung an jedem ihrer Enden zu führen;
- eine Spiralfeder (123), die mit den Drehzapfen verbunden ist und sich zwischen den Enden erstreckt, wobei die Feder im Wesentlichen parallel zur Drehachse der Walze ist;
- eine Vorrichtung (126, 129), die geeignet ist, die Enddrehzapfen der Walze zu bewegen, um der Spiralfeder (123) eine Krümmung zu verleihen.

3. Vorrichtung nach Anspruch 1, **dadurch gekennzeichnet, dass** sie eine Heißluftdüse (13), deren Strahl (130) zwischen die Trommel (11) und die Vorform (110) gerichtet ist, und ein Ablenkblech (135) umfasst, das geeignet ist, die Trommel (11) von diesem Heißluftstrahl (130) zu trennen.

4. Vorrichtung nach Anspruch 1, **dadurch gekennzeichnet, dass** sie Mittel (17, 17') zum Messen der Ausrichtung der Achse der Trommel in Bezug zur Drapierfläche auf der Vorform umfasst, wobei die Mittel mit der Achse der Trommel (11) verbunden sind.

5. Vorrichtung nach Anspruch 1, **dadurch gekennzeichnet, dass** sie umfasst:
- Mittel (16), die mit der Achse der Trommel verbunden und geeignet sind, die Position des Randes einer angrenzenden Bahn (101), die früher auf die Bahn (102) während des Auflegens gelegt wurde, zu erfassen;
- motorisierte Mittel (113) zur relativen Verschiebung der Trommel (11) in Bezug zum Drapierkopf (10) parallel zur Achse der Trommel.

6. Verfahren, das eine Vorrichtung nach Anspruch 1 verwendet, um eine Bahn (100) auf einer so genannten trockenen Vorform (110) zu drapieren, **dadurch gekennzeichnet, dass** es einen Schritt umfasst, darin bestehend, die Bahn auf die Vorform mit Hilfe der Leimwalze (12) zu pressen, wobei die Trommel (11) durch den Manipulator (1) mit einer Vorschubgeschwindigkeit (F) bewegt wird und die Bahn (100) von der Trommel (11) abgewickelt wird, die mit einer Drehgeschwindigkeit (N), die mit der Vorschubgeschwindigkeit (F) synchronisiert ist, angetrieben wird, um die Bahn (100) unter im Wesentlichen konstanter Spannung zwischen ihrem Ausgang aus der Trommel (11) und ihrem Durchgang durch die Leimwalze (12) zu halten.

7. Verfahren nach Anspruch 6, **dadurch gekennzeichnet, dass** die Bahn (100) durch Ansaugen auf die Trommel (11) während ihres Abwickelns gedrückt wird, um ihre Abwickelgeschwindigkeit sowie ihre Spannung zu kontrollieren.

8. Verfahren nach Anspruch 6, **dadurch gekennzeichnet, dass** die Form der Leimwalze (12) dazu angepasst ist, ein definiertes Druckprofil der Bahn (100) auf der Vorform (110) zu erhalten.

9. Verfahren nach Anspruch 8, **dadurch gekennzeichnet, dass** die der Leimwalze (12) verliehene Form nicht zur Form der Vorform (110), auf die die Bahn (100) aufgebracht wird, komplementär ist.

## Claims

1. Device for laying up a so-called dry laminated fibrous preform (110) on a forming tool (70), comprising a manipulator (1) able to move and orient a lay-up head (10) in space, said lay-up head comprising:
- a drum (11) comprising at least one suction orifice (111) emerging at the surface thereof and able to individually grasp a length of fabric (100) on a support (50) outside the tool and the lay-up head;
- means (13) for heating the length of fabric (100);
**characterized in that** it additionally comprises means able to compact the length of fabric on the preform and to tension it before its compaction, comprising:
- motorization means (112) able to drive the drum (11) at a controlled speed of rotation about its axle;
- a taping roller (12) separate from the drum (11) and means (123, 125, 126, 129) for pre-adapting its shape, able to compact the length of fabric deposited on the preform (110).

2. Device according to Claim 1, **characterized in that** the means for adapting the shape of the taping roller (12) comprise:
- two journals (125) able to guide it in rotation at each of its ends;
- a coil spring (123) connected to the journals and extending between said ends, said spring being substantially parallel to the axis of rotation of the roller;
- a device (126, 129) able to move the end journals of the roller so as to confer a curvature on the coil spring (123).

3. Device according to Claim 1, **characterized in that** it comprises a nozzle (13) for blowing hot air, the jet (130) of which is directed between the drum (11) and the preform (110), and a deflector (135) able to isolate the drum (11) from this jet (130) of hot air.

4. Device according to Claim 1, **characterized in that** it comprises means (17, 17') for measuring the orientation of the axle of the drum with respect to the lay-up surface on the preform, said means being secured to the axle of the drum (11).

5. Device according to Claim 1, **characterized in that** it comprises:
- means (16) secured to the axle of the drum and able to detect the position of the edge of an adjacent length of fabric (101) deposited prior to the length of fabric (102) currently being deposited;
- motorized means (113) for the relative movement of the drum (11) with respect to the lay-up head (10) parallel to the axle of said drum.

6. Method using a device according to Claim 1 for laying up a length of fabric (100) on a so-called dry preform (110), **characterized in that** it comprises a step consisting in pressing the length of fabric on the preform with the aid of the taping roller (12), the drum (11) being moved by the manipulator (1) at a feed speed (F), and the length of fabric (100) being unwound from the drum (11) driven at a speed of rotation (N) synchronized with the feed speed (F) so as to keep the length of fabric (100) at a substantially constant tension between its exit from the drum (11) and its pressing by the taping roller (12).

7. Method according to Claim 6, **characterized in that** the length of fabric (100) is pressed by suction onto the drum (11) during its unwinding so as to control its unwinding speed and its tension.

8. Method according to Claim 6, **characterized in that** the shape of the taping roller (12) is adapted to obtain a defined pressure profile for the length of fabric (100) on the preform (110).

9. Method according to Claim 8, **characterized in that** the shape conferred on the taping roller (12) does not complement the shape of the preform (110) on which the length of fabric (100) is deposited.
